# EUROPEAN PATENT SPECIFICATION

(11) **EP 3 100 275 B1**
(45) Date of publication and mention of the grant of the patent: **22.08.2018**
(21) Application number: 15768898.7
(22) Date of filing: 06.01.2015
(51) Int. Cl.: G21C 15/18, G21D 1/00, G21C 11/04, G21C 13/02

(54) **FLOATING NUCLEAR POWER REACTOR WITH A SELF-COOLING CONTAINMENT STRUCTURE AND AN EMERGENCY HEAT EXCHANGE SYSTEM**
SCHWIMMENDES KERNKRAFTWERK MIT SELBSTKÜHLENDER BEHÄLTERSTRUKTUR UND EINEM WÄRMEAUSTAUSCHSYSTEM
RÉACTEUR NUCLÉAIRE FLOTTANT À STRUCTURE DE CONFINEMENT AUTO-REFROIDISSANTE ET À SYSTÈME D'ÉCHANGE THERMIQUE DE SECOURS

(30) Priority: 29.01.2014 US 201414167483
(43) Date of publication of application: 07.12.2016
(73) Proprietor: Ganesan, Palvannanathan, Omaha, NE 68130 (US)
(72) Inventor: Ganesan, Palvannanathan, Omaha, NE 68130 (US)
(74) Representative: Patent- und Rechtsanwälte Ullrich & Naumann
(86) International application number: PCT/US2015/010222
(87) International publication number: WO 2015/147952

(56) References cited:
- WO-A1-91/04560
- WO-A1-2007/147932
- US-A- 3 837 308
- US-A- 3 837 308
- US-A- 4 057 465
- US-A- 4 135 468
- US-A- 4 839 137
- US-A- 5 247 553
- US-A1- 2009 232 267

## Description

### BACKGROUND OF THE INVENTION

### FIELD OF THE INVENTION

This invention relates to a floating nuclear power reactor and more particularly to a floating nuclear power reactor wherein the containment structure of the reactor is self-cooling. This invention relates even more particularly to an emergency heat exchange system for the nuclear power reactor.

### DESCRIPTION OF THE RELATED ART

In most nuclear power reactors, a primary electrically operated water pump supplies cooling water to the reactor. In many cases, a secondary or back-up water pump is provided in case the primary water pump becomes inoperative. However, should the electrical power source for the water pump or water pumps be disrupted such as in a tsunami, a typhoon or an earthquake, the water pumps are not able to pump cooling water to the reactor which may result in a dangerous meltdown. Further, in some situations, the pipes supplying cooling water to the reactor may fail due to natural causes or a terrorist attack.

Currently, there are land based reactor cooling systems available which store water in a tank above the level of the reactor which will passively feed the reactor in case of pump or electricity failure. These tanks are designed to have enough water to cool the system for three days until help can arrive and more water can be pumped in from outside. The problem is that water stored in these tanks is of finite quantity. The tanks will work in case of an emergency shut down like in Fukushima, Japan, but will not work in the case of a pipe breakdown leaking a huge amount of water to the exterior. The reactor core will heat the water supplied from the tank and steam will escape via the pipe breakdown and the water will run out. Once the water runs out, the reactor core will melt due to overheating and explode. It is therefore necessary to be able to supply an infinite amount of water to compensate for lost water via a leaking pipe.

Further, current day reactors are protected by huge containment structures but this is not the answer to pipe breakdown outside or inside the containment chambers. A terrorist attack on the turbine room outside the containment structure is probably more dangerous than an attack on the containment structure since such an attack would result in multiple pipes breaking down, thereby breaking the water circuit between the reactor, turbine and condenser. Such an attack could also result in a breakdown of electrical control systems. This would result in the loss of circulating water to the reactor with the emergency stored water being unable to compensate for all the leaking pipes. In such a situation, the reactor will overheat without heat removal and explode. Examples for floating nuclear power reactors are known from the prior art, e.g. from US 5.247.553 or US 3.837.308.

### SUMMARY OF THE INVENTION

This Summary is provided to introduce a selection of concepts in a simplified form that are further described below in the Detailed Description. This Summary is not intended to identify key aspects or essential aspects of the claimed subject matter. Moreover, this Summary is not intended for use as an aid in determining the scope of the claimed subject matter.

A floating nuclear power reactor is disclosed. A nuclear power reactor is mounted or positioned on a floating barge-like vessel with the barge-like vessel having an upper end positioned above the water level of a body of water and a lower end positioned beneath the water level of the body of water. Side walls extend between the lower and upper ends of the floating vessel. The nuclear power reactor is positioned on the bottom of the barge-like vessel. The nuclear power reactor includes an upstanding concrete containment structure having a lower end, an upstanding sidewall, and an upper end. The confinement structure defines a sealed interior compartment. The lower end and a lower portion of the side wall of the containment structure are positioned below the water level of the body of water. An upstanding cylindrical, metal wall structure extends around the outer side of the concrete containment structure. A cover closes the upper end of the metal wall structure. The relationship of the metal wall structure, the upper outer portion of the containment structure and the cover define a vent chamber. The vent chamber is filled with a filter material such as stones or rocks, chemicals and water. One or more steam exhaust pipes extend outwardly from the upper end of the vent chamber through the cover to the atmosphere. A reactor vessel, having upper and lower ends, is positioned in the interior compartment of the containment structure with the reactor vessel being positioned below the water level of the body of water. The reactor vessel includes an interior compartment having upper and lower ends.

One or more steam exhaust pipes extend through the containment structure so that one end thereof is in communication with the upper end of the interior compartment thereof and so that the other end thereof is in communication with the vent chamber. One or more return pipes are associated with the reactor vessel so that one end thereof is in communication with the upper end of the interior compartment of the reactor vessel and so that the other end is in communication with the lower end of the interior compartment of the reactor vessel. In the preferred embodiment, one of the return pipes is of the closed loop type. A portion of the return pipe is positioned in the interior compartment of the containment structure. The return pipes form a heat exchanger system. A steam exhaust pipe extends from the upper end of the interior compartment of the reactor vessel outwardly through the containment structure to a turbine. A steam by-pass pipe extends from the steam exhaust pipe, which extends to the turbine, to the vent chamber. A normally closed first valve is imposed in the steam by-pass pipe. A normally open second valve is imposed in the steam exhaust pipe, which extends to the turbine, outwardly of the containment structure. A first water passageway, having inner and outer ends, extends through the bottom of the floating vessel and the bottom of the containment structure with the outer end of the first water passageway being in fluid communication with the body of water. The inner end of the first water passageway is in fluid communication with the interior compartment of the containment structure. A spring-loaded first hatch is movably mounted on the exterior of the side wall of the vessel at the outer end of the first water passageway. The first hatch is movable between a closed position and an open position. The first hatch, when in its closed position, closes the outer end of the first water passageway. The first hatch, when in its open position, permits water from the body of water to flow inwardly through the first water passageway into the interior compartment of the containment structure to cool the reactor vessel.

A first latching means is associated with the first hatch with the first latching means being movable between a latched position and an unlatched position. The first latching means, when in its latched position, maintains the first hatch in its closed position. The first latching means, when in its unlatched position, permits the first hatch to move from its closed position to its open position. A first condition responsive actuator is associated with the first latching means to move the first latching means from its latched position to its unlatched position upon the condition, either temperature or pressure, in the containment structure reaching a predetermined level. Although a single first water passageway is disclosed, a plurality of first water passageways could be utilized.

A second water passageway, having inner and outer ends, extends through the bottom of the vessel, through the bottom of the containment structure, and into the interior compartment of the reactor vessel. A second hatch is movably mounted in the second water passageway. The second hatch is movable between a closed position and an open position. The second hatch closes the outer end of said second water passageway when in its closed position. The second hatch, when in its open position, permits water from the body of water to flow inwardly into the interior compartment of the reactor vessel to cool the reactor vessel. A second latching means is associated with the second hatch which is movable from a latched position to an unlatched position. The second latching means, when in its latched position, maintains the second hatch in its closed position. The second latching means, when in its unlatched position, permits the second hatch to move from its closed position to its open position. A condition, either temperature or pressure, responsive actuator is associated with the second latching means to move the second latching means from its latched position to its unlatched position upon the condition within the interior compartment of the reactor vessel reaching a predetermined level. Although a single second water passageway is disclosed, a plurality of second water passageways could be utilized.

It is therefore a principal object of the invention to provide an improved floating nuclear power reactor.

It is another object of the invention to provide supply of cooling water to the reactor in case of the reactor overheating

A further object of the invention is to provide a floating nuclear power reactor which is self-cooling upon the temperature or pressure reaching a predetermined level in the containment structure or reactor vessel of the nuclear power reactor.

A further object of the invention is to provide a self-cooling nuclear power reactor including an emergency heat exchange system.

A further object of the invention is to provide a self-cooling nuclear power reactor including a filtered containment venting system.

These and other objects will be apparent to those skilled in the art.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
Fig. 1 is a sectional view of the floating nuclear power reactor of this invention in a normal operating condition;

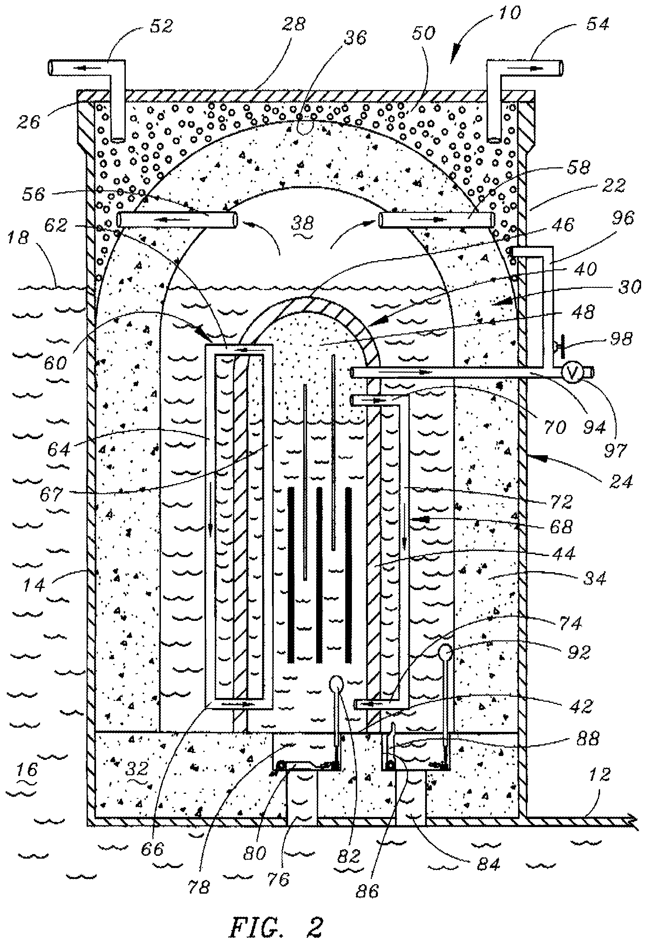

Fig. 2 is a view similar to Fig. 1 except that the interior compartment of the containment structure has been flooded; and

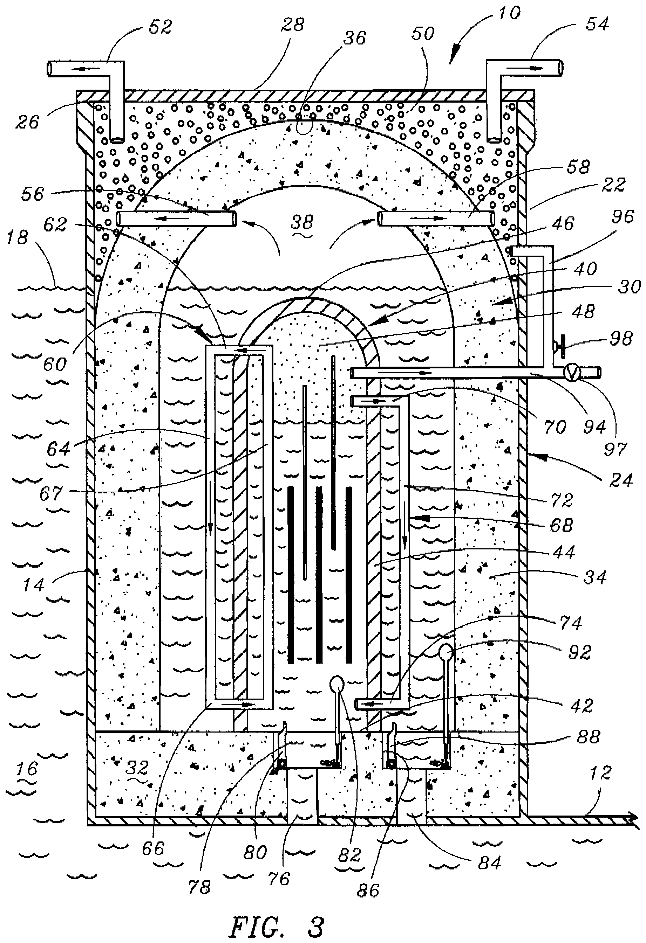

Fig. 3 is a view similar to Fig. 2 except that the interior compartment of the reactor vessel has also been flooded.
Fig. 4 is a sectional view illustrating a pebble bed reactor with a heat exchange system.

### DESCRIPTION OF THE PREFERRED EMBODIMENT

Embodiments are described more fully below with reference to the accompanying figures, which form a part hereof and show, by way of illustration, specific exemplary embodiments. These embodiments are disclosed in sufficient detail to enable those skilled in the art to practice the invention. However, embodiments may be implemented in many different forms and should not be construed as being limited to the embodiments set forth herein. The following detailed description is, therefore, not to be taken in a limiting sense in that the scope of the present invention is defined only by the appended claims.

The numeral 10 refers to a floating vessel such as a barge as shown in the co-pending application Serial No. 14/109,072, filed December 17, 2013, entitled FLOATING NUCLEAR POWER REACTOR WITH A SELF-COOLING CONTAINMENT STRUCTURE. Barge 10 could be a ship hull or other floating structure. The details of the barge will not be described other than to say that the barge includes a bottom 12, upstanding ends, and upstanding sides. One of the ends 14 of the barge is shown in the drawings. Barge 10 may be constructed of any suitable material such as steel, concrete, etc.

Barge 10 is shown as floating in a body of water 16 such as a lake, ocean, etc. For reference purposes, the body of water 16 will be described as having a water level 18. As seen, the upper end of barge 10 is positioned above the water level 18 with a majority of the barge 10 being submerged in the body of water 16.

A nuclear power reactor 22 is positioned on the barge 10 as shown. Normally, a second power reactor would also be positioned on the barge 10 such as shown in the co-pending application. Reactor 22 includes a cylindrical metal housing 24 which includes the end wall 14, which extends upwardly from bottom 12 and which has an open upper end 26 positioned above the water level 18. A cover or lid 28 closes the open upper end 26 of housing 24.

Reactor 22 includes an upstanding containment structure 30 constructed of concrete and which includes a bottom 32, an upstanding side wall 34, and an upper end 36 which defines a sealed interior compartment 38. A reactor vessel 40 is positioned in compartment 38 and includes an open bottom 42, side wall 44 and upper end 46 which define a sealed interior compartment 48. As seen, the bottom 42 of reactor vessel 40 is positioned on the upper end of bottom 32 of containment structure 30.

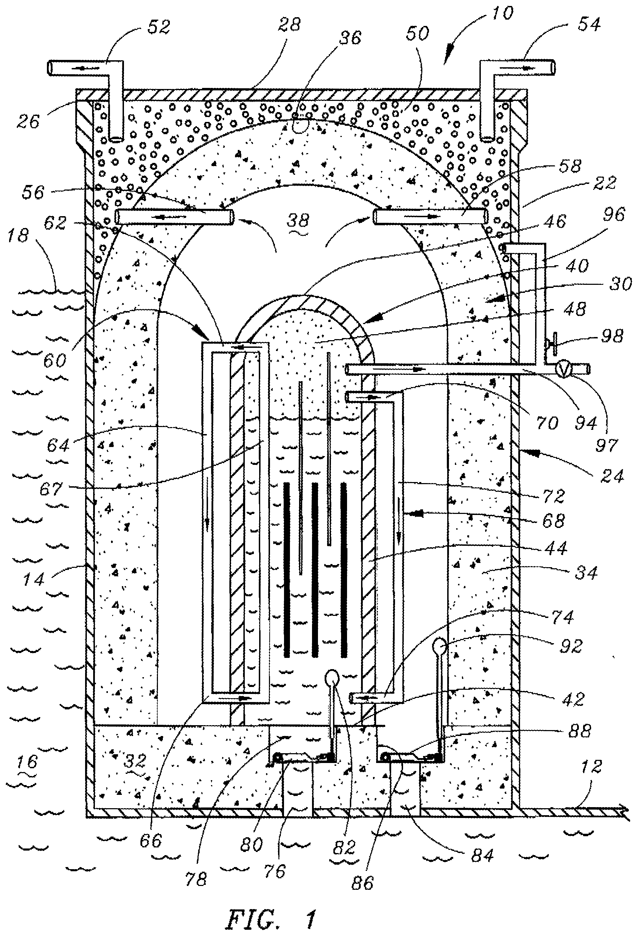

As seen, a portion of the exterior of side wall 34 of containment structure 30 engages the interior of housing 24 to create a vent chamber 50. Vent chamber 50 is filled with rocks, chemicals and water to define a filtered containment venting system. A steam exhaust pipe 52 has its inner end in communication with vent chamber 50 and has its outer end in communication with the atmosphere as shown in Fig. 1. A steam exhaust pipe 54 has its inner end in communication with vent chamber 50 and has its outer end in communication with the atmosphere. Although two steam exhaust pipes 52 and 54 are shown and described, any number of steam exhaust pipes may be utilized.

The numeral 56 refers to a steam exhaust pipe which extends through containment structure 30 adjacent the upper end thereof so that the inner end of steam exhaust pipe 56 is in communication with the upper end of compartment 38 and so that the outer end of steam exhaust pipe 56 is in communication with vent chamber 50. A steam exhaust pipe 58 extends through containment structure 30 adjacent the upper end thereof so that the inner end of steam exhaust pipe 58 is in communication with compartment 38 and so that the outer end of steam exhaust pipe 58 is in communication with vent chamber 50. Although two steam exhaust pipes 56 and 58 are shown and described, any number of those steam exhaust pipes could be utilized.

The numeral 60 refers to a return pipe having pipe portions 62, 64, 66 and 67. Pipe portion 62 extends outwardly from compartment 48 adjacent the upper end of side wall 44 thereof. Pipe portion 64 extends downwardly from the outer end of pipe portion 62 in interior compartment 38, as seen in the drawings. Pipe portion 66 extends inwardly from the lower end of pipe portion 64, through side wall 44 into compartment 48 at the lower end thereof. Pipe portion 67 extends upwardly from the inner end of pipe portion 66 to the inner end of pipe portion 62 to form a closed-loop return pipe. Return pipe 60 is filled with a suitable coolant material such as water, sodium or the like. Although a single return pipe 60 is shown, more than one return pipes 60 could be utilized. The numeral 68 refers to a steam return pipe having pipe portions 70, 72 and 74. Pipe portion 70 extends outwardly from interior compartment 48 adjacent the upper end of side wall 44 of reactor vessel 40. Pipe portion 72 extends downwardly from the outer end of pipe portion 70, as seen in the drawings, so that pipe portion 72 is in interior compartment 38 of containment structure 30. Pipe portion 74 extends inwardly from the lower end of pipe portion 72 through side wall 44 into compartment 48 at the lower end thereof. If desired, the inner ends of pipe portions 70 and 74 could be connected together by a pipe so that the return pipe is a closed loop system. Although a single steam return pipe 68 is shown and described, any number of the steam return pipes 68 could be utilized.

A water passageway 76 extends upwardly through bottom 12 of barge 10 and through bottom 32 of containment structure 30. The inner end of passageway 76 communicates with a larger water passageway 78, which communicates with the interior compartment 48 of reactor vessel 40. A spring-loaded latch 80, which is identical to that shown and described in the co-pending application, is positioned in water passageway 78 to close water passageway 76. Hatch 80 includes a spring (not shown) which urges hatch 80 to its open position. A latching means (not shown), which is identical to that shown in the co-pending application, is associated with the hatch 80 with the latching means being movable between a latched position and an unlatched position as described in the co-pending application. The latching means, when in its latched position, maintains the hatch 80 in its closed position. The latching means, when in its unlatched position, permits the hatch 80 to move from its closed position to its open position. A condition responsive actuator 82, identical to that shown and described in the co-pending application, is associated with the latching means to move the latching means from its latched position to its unlatched position upon the condition, either pressure or temperature, in the interior compartment 48 of reactor vessel 40 reaching a predetermined level.

A water passageway 84 extends upwardly through bottom 12 of barge 10 and through bottom 32 of containment structure 30. The inner end of passageway 84 communicates with a larger passageway 86, which communicates with the interior compartment 38 of containment structure 30. A spring loaded hatch 88, which is identical to that shown in the co-pending application, is positioned in the water passageway 86 to close water passageway 84. Hatch 88 includes a spring (not shown), which urges hatch 88 to its open position. A latching means, identical to that shown in the co-pending application, is associated with the hatch 88 with the latching means being movable between a latched position and an unlatched position. The latching means, when in its latched position, maintains the hatch 88 in its closed position. The latching means, when in its unlatched position, permits the hatch 88 to move from its closed position to its open position. A condition responsive actuator 92, which is identical to that shown and described in the co-pending application, is associated with the latching means to move the latching means from its latched position to its unlatched position, upon the condition, either temperature or pressure, in the interior compartment 38 of containment structure 30 reaching a predetermined level.

The numeral 94 refers to a steam exhaust pipe which extends from the upper end of interior compartment 48 of reactor vessel 40 to a conventional turbine. As seen, steam pipe 94 extends outwardly through side wall 44 of reactor vessel 40, through interior compartment 38, through containment structure 30, and through housing 24. A steam by-pass or vent pipe 96 extends upwardly from steam exhaust pipe 94 and passes through housing 24 into the lower end of vent chamber 50 as seen in the drawings. A normally open valve 97, which is manually or electrically operated, is imposed in pipe 94. A normally closed valve 98 is imposed in vent pipe 96.

The instant invention functions as will be described. Fig. 1 illustrates the instant nuclear power reactor in its normal operating mode. In that mode: (1) hatches 80 and 88 are closed; (2) the return pipes 60 and 68 will not be functioning since pipe portions 64 and 72 are not being cooled by any surrounding coolant (water) and will stay at the same temperature as the reactor coolant; (3) valve 97 will be open and valve 98 will be closed; (4) steam exhaust pipes 56 and 58 will be inactive; (5) and the core of the reactor vessel will heat the water in the interior compartment thereof so that steam is created and passed to the turbine through steam exhaust pipe 94.

The condition responsive actuator 92, upon sensing a predetermined level of pressure or temperature in interior compartment 38, will unlatch the latching means associated with hatch 88, to open hatch 88 thereby creating a temporary pool of water in interior compartment 38 of containment structure 30. The temporary pool of water in interior compartment 38 surrounds reactor vessel 40 to cool reactor vessel 40. Reactor vessel 40 is further cooled by the return pipe 60. As the material in pipe portion 67 is heated by the core of the reactor vessel 40, the material will rise in pipe portion 67 and will pass outwardly through pipe portion 62 and thence downwardly through pipe portion 64. The material in pipe portion 64, as it moves downwardly in pipe portion 64, will be cooled since pipe portion 64 is surrounded by the flood water in interior compartment 38. The cooled material will then pass from the lower end of pipe 64 into the interior compartment 48 of reactor vessel 40. As the cooled material in pipe portion 67 cools the core of the reactor vessel as the material in 67 is heated, the material will rise upwardly through pipe portion 67 and thence again move outwardly through pipe portion 62. The heating and cooling of the material in return pipe 60 causes a continual flow of the material through the heat exchanger system created by return pipe 60. The return pipe 68 functions similarly to return pipe 60 except that return pipe 68 is an open return system rather than a closed loop system as is pipe 60. Steam from interior compartment 48 exits outwardly therefrom by way of pipe portion 70. The steam then passes downwardly through pipe portion 72 which is cooled by the flood water in interior compartment 38. As the steam moves downwardly in pipe portion 72, it is cooled and turns to liquid, with the cooled liquid being returned to the interior compartment 48 of reactor vessel 40 to cool the reactor vessel. The water in interior compartment 38 gets hot in this process and evaporates or turns into steam. This heated water has not been in contact with radioactive material. However, to be safe, the steam in interior compartment 38 is vented into chamber 50 and is filtered by the filter material in chamber 50 and is passed to the atmosphere by way of the steam exhaust pipes 52 and 54. This process is continued until the temperature in the reactor vessel 40 comes down.

The trigger point set to open hatch 88 will be much lower than the trigger point set to open the hatch 80. In this way, there is no sea water entry into the reactor vessel. In the very unlikely scenario that the above described process is unable to cool the core of the reactor vessel 40, and the temperature in the reactor vessel rises, the trigger point to open the hatch 80 would become operational (at the upper safety margins). When water enters reactor vessel, it will evaporate and steam goes into steam exhaust pipe 70 and to the turbine. By opening valve 98, steam passes into the vent chamber 50 where it is filtered and then vented to the atmosphere by way of steam pipes 52 and 54. The filter material in vent chamber 50 and the venting of the steam thereof functions as a filtered containment venting system.

In the event that there is a pipe breakage or leakage in pipe 94 downstream of the reactor, valve 97 may be closed and valve 98 opened so that the steam from the upper end of interior compartment will be vented through pipe 96 and passed through the filter material in vent chamber 50 and thence to the atmosphere by way of steam exhaust pipes 56 and 58.

Although the foregoing description explains the hatches and the actuation of those hatches in detail, it should be noted that the hatches could be opened by means other than that shown. For example, the hatches could be operated by electrical means or by other mechanical means.

Further, the barge could be submerged so that the bottom thereof rests on the floor of the body of water. In that case, the hatches would be formed in the side of the barge.

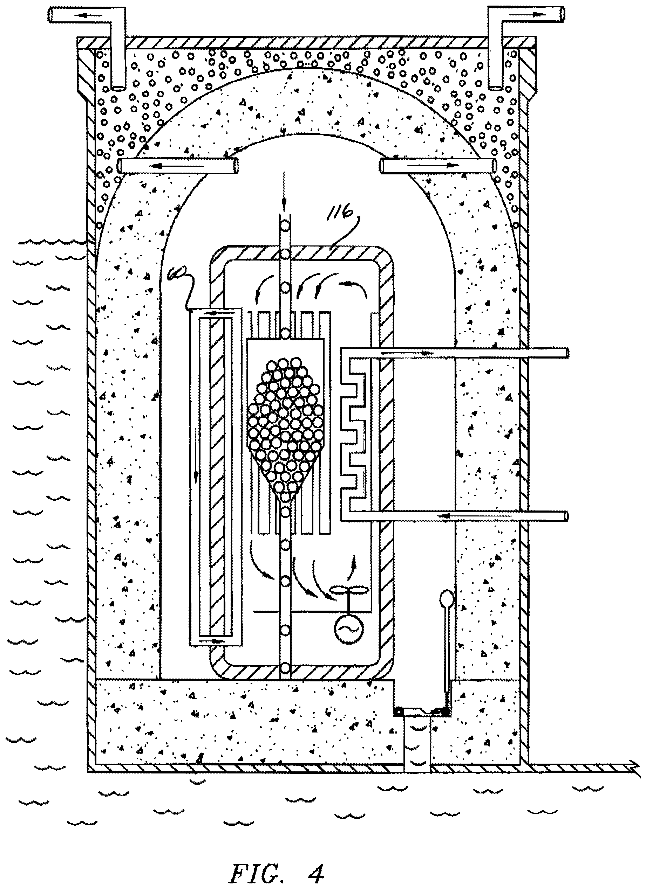

Fig. 4 illustrates a modified form of the reactor which is of the pebble bed type. In the pebble bed type reactor of Fig. 4, the interior compartment of the containment structure can be flooded so that the fluid filled closed-loop heat exchanger 60 will be cooled by the water in the interior compartment of the containment structure upon the interior compartment being flooded by way of the water passageway and hatch being opened.

Thus it can be seen that the invention accomplishes at least all of its stated objectives.

Although the invention has been described in language that is specific to certain structures and methodological steps, it is to be understood that the invention defined in the appended claims is not necessarily limited to the specific structures and/or steps described. Rather, the specific aspects and steps are described as forms of implementing the claimed invention. Since many embodiments of the invention can be practiced without departing from the scope of the invention, the invention resides in the claims hereinafter appended.

## Claims

1. A floating nuclear power reactor (22), comprising:
a floating vessel (10) having a bottom (12) positioned beneath the water level (18) of a body of water (16), sides (14) extending upwardly from said bottom, and an upper end which is positioned above the water level of the body of water;
said floating vessel including an upstanding cylindrical support structure (24) having a lower end, an upstanding cylindrical side wall, having inner and outer surfaces, and a closed upper end;
a nuclear power reactor (22) positioned within said cylindrical support structure; said nuclear power reactor including an upstanding containment structure (30) having a lower end positioned on said bottom of said floating vessel, an upstanding side wall, having upper and lower ends, which is in engagement with said inner surface of said side wall of said cylindrical support structure and a domed upper end;
said containment structure defining a sealed interior compartment, having upper and lower ends;
said domed upper end of said containment structure and said upper end of said side wall of said cylindrical support structure and said closed upper end of said cylindrical support structure defining a vent chamber (50); said vent chamber being filled with a filter material;
at least one first steam exhaust pipe (52, 54) extending from said vent chamber to the atmosphere;
at least one second steam exhaust pipe (56, 58) extending from said upper end (38) of said interior compartment of said containment structure into said vent chamber;
an upstanding reactor vessel, vessel (40), having upper and lower ends, is positioned in said interior compartment of said containment structure;
said reactor vessel having an interior compartment with upper and lower ends;
a third steam exhaust pipe (94) extending from said upper end of said interior compartment of said reactor vessel outwardly through said containment structure and being configured to extend to a turbine;
a normally open valve (97) imposed in said third steam exhaust pipe;
a by-pass steam exhaust pipe (96) extending from said third steam exhaust pipe, outwardly of said containment structure, to said vent chamber;
a normally closed valve (98) in said by-pass steam exhaust pipe;
at least one first return pipe (60, 62, 64, 66, 67), filled with a liquid, extending outwardly from said upper end of said interior compartment of said reactor vessel into said interior compartment of said containment structure, thence downwardly, and thence inwardly into said interior compartment of said reactor vessel at said lower end thereof, and thence upwardly within said interior compartment of said reactor vessel to form a closed loop return pipe;
at least one first water passageway (76), having inner and outer ends, extending through said bottom of said containment structure;
said outer end of said first water passageway being in fluid communication with the body of water;
said inner end of said first water passageway being, in fluid communication with said interior compartment of said containment structure;
a first hatch (80) associated with said first water passageway;
said first hatch being movable between a closed position and an open position;
means associated with said first hatch which in operation yieldably urges said first hatch to said open position;
said first hatch, when in said closed position, closing said first water passageway;
said first hatch, when in said open position, permitting water from the body of water to flow inwardly through said first water passageway into said interior compartment of said containment structure;
a first latching means associated with said first hatch which is movable between a latched position and an unlatched position;
said first latching means, when in said latched position, maintaining said first hatch in said closed position;
said first latching means, when in said unlatched position, permitting said first hatch to move from said closed position to said open position;
a first condition responsive actuator (82) associated with said first latching means and adapted to move said first latching position from said latched position to said unlatched position upon the condition within said containment structure reaching a predetermined level;
at least one second water passageway (84), having inner and outer ends, extending through said bottom of said containment structure;
said outer end of said second water passageway being in fluid communication with the body of water;
said inner end of said second water passageway being in fluid communication with said interior compartment of said reactor vessel;
a second hatch movably associated with said second water passageway;
said second hatch being movable between a closed position and an open position;
means associated with said second hatch which in operation yieldably urges said second hatch to said open position;
said second hatch, when in said closed position, closing said second water passageway;
said second hatch, when in said open position, permitting water from the body of water to flow inwardly through said second water passageway into said interior compartment of said reactor vessel;
a second latching means associated with said second hatch which is movable between a latched position and an unlatched position;
said second latching means, when in said latched position, maintaining said second hatch in said closed position;
said second latching means, when in said unlatched position, permitting said second hatch to move from said closed position to said open position; and
a second condition responsive actuator (92) associated with said second latching means and adapted to move said second latching means from said latched position to said unlatched position upon the condition within said reactor vessel reaching a predetermined level.

2. The floating nuclear power reactor of Claim 1 wherein in operation the predetermined condition level of said first condition responsive actuator is lower than the predetermined condition level of said second condition responsive actuator whereby said first latching means will move to its said unlatched position prior to said second latching means moving to its said unlatched position so that said containment structure will be flooded prior to said reactor vessel being flooded.

3. The floating nuclear power reactor of Claim 1 wherein a plurality of first steam exhaust pipes extend from said vent chamber to the atmosphere.

4. The floating nuclear power reactor of Claim 1 wherein a plurality of second steam exhaust pipes extend from said upper end of said interior compartment of said containment structure into said vent chamber.

5. The floating nuclear power reactor of Claim 1 wherein said filter material is comprised of rocks, chemicals and water.

6. The floating nuclear power reactor of Claim 1 wherein at least one second return steam pipe extends outwardly from said upper end of said interior compartment of said reactor vessel, thence downwardly, and thence inwardly into said interior compartment of said reactor vessel at said lower end thereof.

7. The floating nuclear power reactor of Claim 1 wherein a valve is imposed in said third steam exhaust pipe.

8. The floating nuclear power reactor of Claim 7 wherein said valve is imposed in said third steam exhaust pipe outwardly of said containment structure.

9. A method of cooling an overheated floating nuclear power reactor (22), the reactor (22) comprising a reactor vessel (40) having an outer surface, with the nuclear reactor (22) being positioned in a structure (10, 12, 14) surrounded by a body of water (16), **characterised by** the steps of: passing water from the body of water (16) over the outside surface of the nuclear reactor vessel (40) until the nuclear reactor (22) cools to a safe temperature.

## Patentansprüche

1. Ein schwimmendes Kernkraftwerk (22), umfassend:
ein schwimmendes Behältnis (10) mit einem Boden (12), der unterhalb des Wasserniveaus (18) eines Wasserkörpers (16) positioniert ist, Seiten (14), die sich von dem Boden nach oben erstrecken, und einem oberen Ende, das oberhalb des Wasserniveaus des Wasserkörpers positioniert ist,
wobei das schwimmende Behältnis eine aufrechte zylindrische Tragstruktur (24) mit einem unteren Ende, eine aufrechte zylindrische Seitenwand mit inneren und äußeren Oberflächen und ein geschlossenes oberes Ende aufweist,
ein innerhalb der zylindrischen Tragstruktur angeordnetes Kernkraftwerk (22),
wobei das Kernkraftwerk eine aufrechte Einschlussstruktur (30) mit einem unteren Ende, das auf dem Boden des schwimmenden Behältnisses angeordnet ist, einer aufrechten Seitenwand mit oberen und unteren Enden, die mit der inneren Oberfläche der Seitenwand der zylindrischen Tragstruktur in Eingriff ist, und einem gewölbten oberen Ende aufweist,
wobei die Einschlussstruktur eine abgedichtete innere Kammer mit oberen und unteren Enden definiert,
wobei das gewölbte obere Ende der Einschlussstruktur und das obere Ende der Seitenwand der zylindrischen Tragstruktur und das geschlossene obere Ende der zylindrischen Tragstruktur eine Entlüftungskammer (50) definieren,
wobei die Entlüftungskammer mit einem Filtermaterial gefüllt ist,
zumindest ein erstes Dampfablassrohr (52, 54), das sich aus der Entlüftungskammer in die Atmosphäre erstreckt,
zumindest ein zweites Dampfablassrohr (56, 58), das sich von dem oberen Ende (38) der inneren Kammer der Einschlussstruktur in die Entlüftungskammer erstreckt,
wobei ein aufrechter Reaktorbehälter, Behälter (40), mit oberen und unteren Enden in der inneren Kammer der Einschlussstruktur angeordnet ist,
wobei der Reaktorbehälter eine innere Kammer mit oberen und unteren Enden aufweist,
ein drittes Dampfablassrohr (94), das sich von dem oberen Ende der inneren Kammer des Reaktorbehälters durch die Einschlussstruktur nach außen erstreckt und derart ausgebildet ist, dass es sich zu einer Turbine erstreckt,
ein normalerweise offenes Ventil (97), das in dem dritten Dampfablassrohr angeordnet ist,
ein By-Pass-Dampfablassrohr (96), das sich von dem dritten Dampfablassrohr außerhalb der Einschlussstruktur zu der Entlüftungskammer erstreckt,
ein normalerweise geschlossenes Ventil (98) in dem By-Pass-Dampfablassrohr,
zumindest eine erste Rücklaufleitung (60, 62, 64, 66, 67), die mit einer Flüssigkeit gefüllt ist und sich von dem oberen Ende der inneren Kammer des Reaktorbehälters nach außen in die innere Kammer der Einschlussstruktur erstreckt, von dort nach unten und von dort nach innen in die innere Kammer des Reaktorbehälters an dessen unterem Ende und von dort nach oben innerhalb der inneren Kammer des Reaktorbehälters, um eine geschlossene Ring-Rücklaufleitung zu bilden,
zumindest einen ersten Wasserdurchgang (76) mit inneren und äußeren Enden, der sich durch den Boden der Einschlussstruktur erstreckt,
wobei das äußere Ende des ersten Wasserdurchgangs in Strömungsverbindung mit dem Wasserkörper ist,
wobei das innere Ende des ersten Wasserdurchgangs in Strömungsverbindung mit der inneren Kammer der Einschlussstruktur ist,
eine erste Klappe (80), die dem ersten Wasserdurchgang zugeordnet ist,
wobei die erste Klappe zwischen einer geschlossenen Position und einer offenen Position bewegbar ist,
ein der ersten Klappe zugeordnetes Mittel, das im Betrieb die erste Klappe nachgiebig in die offene Position drückt,
wobei die erste Klappe den ersten Wasserdurchgang schließt, wenn sie in der geschlossenen Position ist,
wobei die erste Klappe ein Fließen von Wasser aus dem Wasserkörper nach innen durch den ersten Wasserdurchgang in die innere Kammer der Einschlussstruktur ermöglicht, wenn sie in der offenen Position ist,
ein erstes der ersten Klappe zugeordnetes Verriegelungsmittel, das zwischen einer verriegelten Position und einer unverriegelten Position bewegbar ist,
wobei das erste Verriegelungsmittel die erste Klappe in der geschlossenen Position hält, wenn es in der verriegelten Position ist,
wobei das erste Verriegelungsmittel der ersten Klappe eine Bewegung aus der geschlossenen Position in die offene Position ermöglicht, wenn es in der unverriegelten Position ist,
einen ersten zustandsresponsiven Aktuator (82), der dem ersten Verriegelungsmittel zugeordnet und dazu ausgebildet ist, die erste Verriegelungsposition auf ein Erreichen eines vorbestimmten Niveaus des Zustands innerhalb der Einschlussstruktur aus der verriegelten Position in die unverriegelte Position zu bewegen,
zumindest einen zweiten Wasserdurchgang (84), der innere und äußere Enden aufweist und sich durch den Boden der Einschlussstruktur erstreckt,
wobei das äußere Ende des zweiten Wasserdurchgangs in Strömungsverbindung mit dem Wasserkörper ist,
wobei das innere Ende des zweiten Wasserdurchgangs in Strömungsverbindung mit der inneren Kammer des Reaktorbehälters ist,
eine zweite Klappe, die dem zweiten Wasserdurchgang bewegbar zugeordnet ist,
wobei die zweite Klappe zwischen einer geschlossenen Position und einer offenen Position bewegbar ist,
ein der zweiten Klappe zugeordnetes Mittel, das im Betrieb die zweite Klappe nachgiebig in die offene Position drückt,
wobei die zweite Klappe den zweiten Wasserdurchgang verschließt, wenn sie in der geschlossenen Position ist,
wobei die zweite Klappe ein Strömen von Wasser aus dem Wasserkörper durch den zweiten Wasserdurchgang nach innen in die innere Kammer des Reaktorbehälters ermöglicht, wenn sie in der offenen Position ist,
ein der zweiten Klappe zugeordnetes zweites Verriegelungsmittel, das zwischen einer verriegelten Position und einer unverriegelten Position bewegbar ist,
wobei das zweite Verriegelungsmittel die zweite Klappe in der geschlossenen Position hält, wenn es in der verriegelten Position ist,
wobei das zweite Verriegelungsmittel ein Bewegen der zweiten Klappe aus der geschlossenen Position in die offene Position ermöglicht, wenn es in der unverriegelten Position ist, und
einen zweiten zustandsresponsiven Aktuator (92), der dem zweiten Verriegelungsmittel zugeordnet und dazu ausgebildet ist, das zweite Verriegelungsmittel auf ein Erreichen eines vorbestimmten Niveaus des Zustands innerhalb des Reaktorbehälters aus der verriegelten Position in die unverriegelte Position zu bewegen.

2. Das schwimmende Kernkraftwerk nach Anspruch 1, wobei im Betrieb das vorbestimmte Zustandsniveau des ersten zustandsresponsiven Aktuators niedriger ist als das vorbestimmte Zustandsniveau des zweiten zustandsresponsiven Aktuators, wobei sich das erste Verriegelungsmittel zu seiner unverriegelten Position bewegt, bevor sich das zweite Verriegelungsmittel zu seiner unverriegelten Position bewegt, so dass die Einschlussstruktur geflutet wird, bevor der Reaktorbehälter geflutet wird.

3. Das schwimmende Kernkraftwerk nach Anspruch 1, wobei sich eine Vielzahl von ersten Dampfablassrohren aus der Entlüftungskammer in die Atmosphäre erstrecken.

4. Das schwimmende Kernkraftwerk nach Anspruch 1, wobei sich eine Vielzahl von zweiten Dampfablassrohren von dem oberen Ende der inneren Kammer der Einschlussstruktur in die Entlüftungskammer erstrecken.

5. Das schwimmende Kernkraftwerk nach Anspruch 1, wobei das Filtermaterial aus Steinen, Chemikalien und Wasser besteht.

6. Das schwimmende Kernkraftwerk nach Anspruch 1, wobei sich zumindest eine zweite Rücklaufdampfleitung aus dem oberen Ende der inneren Kammer des Reaktorbehälters nach außen erstreckt, von dort nach unten und von dort nach innen in die innere Kammer des Reaktorbehälters an dessen unterem Ende.

7. Das schwimmende Kernkraftwerk nach Anspruch 1, wobei in dem dritten Dampfablassrohr ein Ventil angeordnet ist.

8. Das schwimmende Kernkraftwerk nach Anspruch 7, wobei das Ventil in dem dritten Dampfablassrohr außerhalb der Einschlussstruktur angeordnet ist.

9. Ein Verfahren zum Kühlen eines überhitzten schwimmenden Kernkraftwerks (22), wobei das Kernkraftwerk (22) einen Reaktorbehälter (40) aufweist, der eine äußere Oberfläche aufweist, wobei das Kernkraftwerk (22) in einer Struktur (10, 12, 14) angeordnet ist, die von einem Wasserkörper (16) umgeben ist, **gekennzeichnet durch** die Schritte:
Laufenlassen von Wasser aus dem Wasserkörper (16) über die äußere Oberfläche des Kernreaktorbehälters (40), bis das Kernkraftwerk (22) auf eine sichere Temperatur abkühlt.

## Revendications

1. Réacteur nucléaire flottant (22) qui comprend :
une cuve flottante (10) ayant un fond (12) positionné sous le niveau d'eau (18) d'un corps d'eau (16), des côtés (14) s'allongeant vers le haut depuis ledit fond, et une extrémité supérieure qui est positionnée au-dessus du niveau d'eau du corps d'eau ;
ladite cuve flottante comprenant une structure de support cylindrique verticale (24) qui possède un extrémité inférieure, une paroi latérale cylindrique droite, possédant des surfaces internes et externes, et une extrémité supérieure fermée ;
un réacteur nucléaire (22) positionné dans ladite structure de support cylindrique ; ledit réacteur nucléaire comprenant une structure de confinement verticale (30) ayant une extrémité inférieure positionnée sur ledit fond de ladite cuve flottante, une paroi latérale verticale, ayant des extrémités supérieures et inférieures, qui s'engage avec ladite surface interne de ladite paroi latérale de ladite structure de support cylindrique et d'une extrémité supérieure en forme de dôme ;
ladite structure de confinement définissant un compartiment intérieur étanche, ayant des extrémités supérieures et inférieures ;
ladite extrémité supérieure en forme de dôme de ladite structure de confinement et ladite extrémité supérieure de ladite paroi latérale de ladite structure de support cylindrique et ladite extrémité supérieure fermée de ladite structure de support cylindrique définissant une chambre de ventilation (50) ;
ladite chambre de ventilation étant remplie d'un matériau filtrant ;
au moins un premier tuyau d'échappement de vapeur (52, 54) s'étendant de ladite chambre de ventilation vers l'atmosphère ;
au moins un second tuyau d'échappement de vapeur (56, 58) s'étendant depuis ladite extrémité supérieure (38) dudit compartiment intérieur de ladite structure de confinement vers ladite chambre de ventilation ;
une cuve de réacteur verticale, la cuve (40) ayant des extrémités supérieures et inférieures, étant positionnée dans ledit compartiment inférieur de ladite structure de confinement ;
ladite cuve de réacteur ayant un compartiment intérieur muni d'extrémités supérieures et inférieures ;
un troisième tuyau d'échappement de vapeur (94) s'étendant depuis ladite extrémité supérieure dudit compartiment intérieur de ladite cuve de réacteur, vers l'extérieur, à travers ladite structure de confinement, et étant configurépour s'étendre vers une turbine ;
une vanne normalement ouverte (97) imposée dans ledit troisième tuyau d'échappement de vapeur (96)
un tuyau d'échappement de vapeur en dérivation (96) s'étendant du troisième tuyau d'échappement de vapeur, vers l'extérieur de ladite structure de confinement, vers ladite chambre de ventilation ;
une vanne normalement ouverte (98) dans ledit tuyau d'échappement de vapeur en dérivation ;
au moins un premier tuyau de retour (60, 62, 64, 66, 67), rempli d'un liquide, s'étendant vers l'extérieur de ladite extrémité supérieure dudit compartiment interne de ladite cuve de réacteur vers ledit compartiment interne de ladite structure de confinement, puis vers le bas et vers l'intérieur, vers ledit compartiment interne de ladite cuve de réacteur au niveau de ladite extrémité inférieure de celle-ci, et vers le haut dans ledit compartiment interne de ladite cuve de réacteur pour former un tuyau de retour en boucle fermée ;
au moins un premier passage d'eau (76), ayant des extrémités internes et externes, s'étendant à travers ledit fond de ladite structure de confinement ; ladite extrémité externe dudit premier passage d'eau étant en communication fluidique avec le corps d'eau ;
ladite extrémité interne dudit premier passage d'eau étant en communication fluidique avec ledit compartiment interne de ladite structure de confinement ;
une première trappe (80) associée audit premier passage d'eau ; ladite première trappe pouvant passer d'une position fermée à une position ouverte ;
un moyen associé à la première trappe qui, pendant le fonctionnement, engage élastiquement ladite première trappe dans ladite position ouverte ;
ladite première trappe, dans ladite position fermée, fermant ledit premier passage d'eau ;
ladite première trappe, dans ladite position ouverte, permettant à l'eau du corps d'eau de s'écouler vers l'intérieur à travers ledit premier passage d'eau,, vers ledit compartiment interne de ladite structure de confinement ;
un premier élément de verrouillage associé à ladite première trappe, qui peut passer d'une position verrouillée à une position déverrouillée ;
ledit premier moyen de verrouillage, dans ladite position verrouillée, maintenant ladite première trappe dans ladite position fermée ;
ledit premier moyen de verrouillage, dans ladite position déverrouillée, permettant à ladite première trappe de passer de ladite position fermée à ladite position ouverte ;
un premier actionneur qui réagit à une condition (82) associé audit premier moyen de verrouillage et adapté pour faire passer ladite première position de verrouillage de ladite position verrouillée à ladite position déverrouillée selon la condition dans ladite structure de confinement qui atteint un niveau prédéterminé ;
au moins un second passage d'eau (84) ayant des extrémités internes et externes, s'étendant à travers le fond de ladite structure de confinement ;
ladite extrémité externe dudit second passage d'eau étant en communication fluidique avec le corps d'eau ;
ladite extrémité interne dudit second passage d'eau étant en communication fluidique avec ledit compartiment interne de ladite cuve de réacteur ;
une seconde trappe associée de façon mobile audit second passage d'eau ;
ladite seconde trappe pouvant passer d'une position fermée à une position ouverte ;
un moyen associé à ladite seconde trappe qui, pendant le fonctionnement, engage élastiquement ladite seconde trappe en position ouverte ;
ladite seconde trappe, dans la position ouverte, permettant à l'eau du corps d'eau de s'écouler vers l'intérieur à travers ledit second passage d'eau, vers ledit compartiment interne de ladite cuve de réacteur ;
un second moyen de verrouillage associé à ladite seconde trappe qui peut passer d'une position verrouillée à une position déverrouillée ;
ledit second moyen de verrouillage, en position verrouillée, maintenant ladite seconde trappe dans ladite position fermée ;
ledit second moyen de verrouillage, dans ladite position déverrouillée, permettant à ladite seconde trappe de passer de ladite position fermée à ladite position ouverte ; et
un second actionneur qui réagit à une condition (92) associé audit second moyen de verrouillage et adapté pour faire passer ledit second moyen de verrouillage de ladite position verrouillée à ladite position déverrouillée selon la condition dans la cuve de réacteur qui atteint un niveau prédéterminé.

2. Réacteur nucléaire flottant selon la revendication 1, dans lequel, pendant le fonctionnement, le niveau de condition prédéterminé dudit premier actionneur qui réagit à une condition est inférieur au niveau de condition prédéterminé dudit second actionneur qui réagit à une condition, moyennant quoi ledit premier moyen de verrouillage se déplace dans ladite position verrouillée avant que ledit second moyen de verrouillage se déplace dans ladite position déverrouillée de sorte que ladite structure de confinement soit inondée avant que ladite cuve de réacteur soit inondée.

3. Réacteur nucléaire flottant selon la revendication 1, dans lequel plusieurs premiers tuyaux d'échappement de vapeur s'étendent de ladite chambre de ventilation vers l'atmosphère.

4. Réacteur nucléaire flottant selon la revendication 1, dans lequel plusieurs seconds tuyaux d'échappement de vapeur s'étendent de ladite extrémité supérieure dudit compartiment interne de ladite structure de confinement vers ladite chambre de ventilation.

5. Réacteur nucléaire flottant selon la revendication 1, dans lequel ledit matériau filtrant est composé de pierres, de produits chimiques et d'eau.

6. Réacteur nucléaire flottant selon la revendication 1, dans lequel au moins un second tuyau de retour de vapeur s'étend vers l'extérieur depuis ladite extrémité supérieure dudit compartiment interne de ladite cuve de réacteur, puis vers le bas, puis vers le haut vers ledit compartiment interne de ladite cuve de réacteur au niveau de ladite extrémité inférieure de celle-ci.

7. Réacteur nucléaire flottant selon la revendication 1, dans lequel une vanne est imposée dans ledit troisième tuyau d'échappement de vapeur.

8. Réacteur nucléaire flottant selon la revendication 7, dans lequel ladite vanne est imposée dans ledit troisième tuyau d'échappement de vapeur vers l'extérieur de ladite structure de confinement.

9. Procédé de refroidissement d'un réacteur nucléaire flottant en surchauffe (22), le réacteur (22) comprenant une cuve de réacteur (40) ayant une surface externe, le réacteur nucléaire (22) étant positionné dans une structure (10, 12, 14) entourée par un corps d'eau (16), **caractérisé par** les étapes consistant à :
faire passer de l'eau depuis le corps d'eau (16), par-dessus la surface extérieure de la cuve du réacteur nucléaire (40), jusqu'à ce que le réacteur nucléaire (22) soit refroidi à une température de sécurité.
